# EUROPEAN PATENT APPLICATION

(11) **EP 4 742 469 A1**
(43) Date of publication of application: **13.05.2026**
(21) Application number: 24212185.3
(22) Date of filing: 11.11.2024
(51) Int. Cl.: H02G 1/02, F16B 2/10, H02G 7/05, G09F 7/18

(54) **SUSPENSION DEVICE**

(71) Applicant: Hammar, Lars, 790 21 Bjursås (SE)
(72) Inventor: EVERTSSON, Johan, 790 21 Bjursås (SE)
(74) Representative: Bjerkén Hynell KB

(57) **Abstract**

A suspension device (1) for suspending an object from an overhead power transmission line, comprising:
- two gripping arms (10, 20) pivotally mounted to a base (5) and pivotable in relation to each other between a closed position and an open position; and
- clamping jaws (11, 21) fixed to and carried by a respective one of the gripping arms.

Each clamping jaw has a base part (30) with two flank sections (32a, 32b) projecting from the associated gripping arm on opposite sides thereof, wherein each flank section has a rear face (33) that is exposed to surrounding air. Each clamping jaw also has upper and lower fingers (36, 39) that are rigidly connected to and project obliquely upwards and downwards, respectively, from the base part (30), wherein each finger has a rear face (37) that is exposed to surrounding air.

## Description

### FIELD OF THE INVENTION AND PRIOR ART

The present invention relates to a suspension device according to the preamble of claim 1 for suspending a sign or other object from an overhead power transmission line. The suspension device according to the invention may for instance be used for suspending a sign, a flag or a bird-scaring device from an overhead power transmission line.

A suspension device according to the preamble of claim 1 is previously known from EP 2 427 877 B1. The different parts of a suspension device of this type, except for the tension springs, are typically made of plastic material. When clamped to an overhead power transmission line, the suspension device will be exposed to heat from the overhead power transmission line and must be capable of withstanding this heat without being degraded. Standard overhead power transmission lines used for high-voltage power transmission typically operate at temperatures up to 90°C under normal conditions. A suspension device of the type disclosed in EP 2 427 877 B1 can withstand such temperatures even when made of relatively simple and inexpensive plastic materials. However, if a suspension device of the type disclosed in EP 2 427 877 B1 is to be clamped to overhead power transmission lines used for extra-high or ultra-high voltage levels, the suspension device has to be made of more temperature-resistant and expensive plastic materials to withstand the higher operating temperatures of such overhead power transmission lines, which will make the suspension device relatively expensive to produce.

### OBJECT OF THE INVENTION

The object of the present invention is to provide a suspension device of the above-mentioned type with new and favourable design.

### SUMMARY OF THE INVENTION

According to the present invention, said object is achieved by means of a suspension device having the features defined in claim 1.

The suspension device according to the invention comprises:
- a base;
- an attachment bracket, which is fixed to the base and to which an object, such as a sign or the similar, is attached or attachable;
- a first gripping arm, which is pivotally mounted to the base and pivotable in relation to the base about a first pivot axis, and a second gripping arm, which is pivotally mounted to the base and pivotable in relation to the base about a second pivot axis that is parallel to and located at a distance from the first pivot axis;
- a first clamping jaw fixed to and carried by the first gripping arm and a second clamping jaw fixed to and carried by the second gripping arm, wherein the first and second gripping arms, by pivoting about the respective pivot axis, are pivotable in relation to each other between an open position, in which the first and second gripping arms, and thereby the first and second clamping jaws, are pivoted away from each other to allow an overhead power transmission line to be inserted in a space between the first and second clamping jaws, and a closed position, in which the first and second gripping arms, and thereby the first and second clamping jaws, are pivoted towards each other to allow the first and second clamping jaws to grip an overhead power transmission line received in the space between the first and second clamping jaws and thereby clamp the suspension device to the overhead power transmission line; and
- at least one spring member configured to act between the first and second gripping arms to urge them towards the closed position, wherein the first and second gripping arms are pivotable from the closed position towards the open position against the action of the at least one spring member.

The first clamping jaw comprises a base part, through which it is connected to the first gripping arm, wherein this base part has a central section, a first flank section that is rigidly connected to the central section and projects laterally from the first gripping arm on a first side thereof and an opposite second flank section that is rigidly connected to the central section and projects laterally from the first gripping arm on an opposite second side thereof, wherein these first and second flank sections have a respective rear face that is exposed to surrounding air and a respective front face that is substantially flush with a front face of the intermediate central section, and wherein the front face of the central section, the front face of the first flank section and the front face of the second flank section together form a first primary clamping surface that extends substantially in parallel to the first pivot axis.

In the corresponding manner, the second clamping jaw comprises a base part, through which it is connected to the second gripping arm, wherein this base part has a central section, a first flank section that is rigidly connected to the central section and projects laterally from the second gripping arm on a first side thereof and an opposite second flank section that is rigidly connected to the central section and projects laterally from the second gripping arm on an opposite second side thereof, wherein these first and second flank sections have a respective rear face that is exposed to surrounding air and a respective front face that is substantially flush with a front face of the intermediate central section, wherein the front face of the central section, the front face of the first flank section and the front face of the second flank section together form a second primary clamping surface that extends substantially in parallel to the second pivot axis.

In the closed position of the gripping arms, the above-mentioned first and second primary clamping surfaces on the two clamping jaws are configured to face each other and apply pressure against an overhead power transmission line received in the space between the first and second clamping jaws by pressing against said overhead power transmission line from opposite sides thereof.

The first clamping jaw is provided with two or more upper fingers that are rigidly connected to and project obliquely upwards from the base part of the first clamping jaw, each one of these upper fingers having a rear face that is exposed to surrounding air and an opposite front face that slants forwards beyond the first primary clamping surface. The second clamping jaw is provided with one or more upper fingers that are rigidly connected to and project obliquely upwards from the base part of the second clamping jaw, each one of these upper fingers having a rear face that is exposed to surrounding air and an opposite front face that slants forwards beyond the second primary clamping surface. In order to prevent the upper fingers on the first clamping jaw from interfering with the upper finger or fingers on the second clamping jaw in the closed position of the gripping arms, the upper fingers on the first and second clamping jaws are arranged in an interleaved configuration, such that said one or more upper fingers on the second clamping jaw are configured to interleave with said two or more upper fingers on the first clamping jaw when the gripping arms are in the closed position. Thus, the upper fingers on the first clamping jaw and the upper finger or fingers on the second clamping jaw are alternately positioned in such a way that they fit between each other when the gripping arms are in the closed position.

The first clamping jaw is provided with two or more lower fingers that are rigidly connected to and project obliquely downwards from the base part of the first clamping jaw, each one of these lower fingers having a rear face that is exposed to surrounding air and an opposite front face that slants forwards beyond the first primary clamping surface. In the corresponding manner, the second clamping jaw is provided with two or more lower fingers that are rigidly connected to and project obliquely downwards from the base part of the second clamping jaw, each one of these lower fingers having a rear face that is exposed to surrounding air and an opposite front face that slants forwards beyond the second primary clamping surface. In order to prevent the lower fingers on the first clamping jaw from interfering with the lower fingers on the second clamping jaw in the closed position of the gripping arms, the lower fingers on the first and second clamping jaws are arranged in an interleaved configuration, such that said two or more lower fingers on the second clamping jaw are configured to interleave with said two or more lower fingers on the first clamping jaw when the gripping arms are in the closed position. Thus, the lower fingers on the first clamping jaw and the lower fingers on the second clamping jaw are alternately positioned in such a way that they fit between each other when the gripping arms are in the closed position.

The front faces of said upper fingers on the first and second clamping jaws form upper secondary clamping surfaces capable of applying pressure against an overhead power transmission line received in the space between the first and second clamping jaws by pressing against it. The front faces of said lower fingers on the first and second clamping jaws form lower secondary clamping surfaces capable of applying pressure against an overhead power transmission line received in the space between the first and second clamping jaws by pressing against it. Depending on the diameter of an overhead power transmission line received in the space between the two clamping jaws and the vertical position of the overhead power transmission line within this space, the overhead power transmission line may be subject to pressing forces from the first and second primary clamping surfaces, as well as from said upper and/or lower secondary clamping surfaces, or from the first and second primary clamping surfaces alone.

When the first and second clamping jaws are pressed against an overhead power transmission line, they will absorb heat from it. The air-exposed faces of the first and second clamping jaws contribute to dissipating this absorbed heat. Thus, the inclusion in the clamping jaws of the above-mentioned flank sections with air-exposed rear faces and lower fingers with air-exposed rear faces improves the heat-dissipating capability of the suspension device compared to the suspension device disclosed in EP 2 427 877 B1, which will improve the ability of the suspension device to withstand higher temperatures.

According to an embodiment of the invention, cooling fins or cooling ribs are provided on the rear faces of the first and second flank sections of the base part of the first clamping jaw and on the rear faces of the first and second flank sections of the base part of the second clamping jaw. These cooling fins or cooling ribs will further enhance the heat-dissipating capability of the suspension device.

Another embodiment of the invention is characterized in:
- that the first clamping jaw is releasably fixed to the first gripping arm, preferably by means of a snap-fit connection, wherein the base part of the first clamping jaw is configured to bear against a support surface on the first gripping arm through a rear face of the central section of this base part; and
- that the second clamping jaw is releasably fixed to the second gripping arm, preferably by means of a snap-fit connection, wherein the base part of the second clamping jaw is configured to bear against a support surface on the second gripping arm through a rear face of the central section of this base part.

By having each clamping jaw produced as a separate part that is releasably fixed to the associated gripping arm, it becomes possible to make the clamping jaws from a different material than the gripping arms, which in its turn makes it possible to use a more heat-resistive and expensive material for only those parts of the suspension device that are closest to the overhead power transmission line and most intensely exposed to the heat from it. It also becomes possible to replace a damaged clamping jaw with a new one, and to adapt suspension devices with a uniform base and gripping arm design to the expected operating temperatures of different types of overhead power transmission lines by providing different clamping jaws made of material with different levels of heat resistance.

As an alternative, each clamping jaw may be produced as a separate part that is permanently fixed to the associated gripping arm in any suitable manner.

When each clamping jaw is produced as a separate part that is releasably fixed to the associated gripping arm, cooling fins or cooling ribs may be provided on the rear face of the central section of the base part of the first clamping jaw and on the rear face of the central section of the base part of the second clamping jaw, such that air channels are provided between the base part of each clamping jaw and the support surface on the associated gripping arm. Hereby, the heat-dissipating capability of the suspension device is further enhanced.

According to another embodiment of the invention, each one of the first and second primary clamping surfaces is covered by a layer of elastomeric material, preferably in the form of high-temperature silicone rubber. Advantageously, also each one of the upper and lower secondary clamping surfaces, i.e. the front face of each one of the above-mentioned upper and lower fingers, is covered by such a layer. When the suspension device is clamped to an overhead power transmission line, the layer of elastomeric material on the clamping surfaces will improve the grip of the clamping jaws on the overhead power transmission line and prevent the clamping jaws from sliding or rotating on the overhead power transmission line. This, in turn, protects the overhead power transmission line from wear caused by the clamping jaws. With the use of high-temperature silicone rubber, the ability of the suspension device to withstand higher temperatures is further improved.

The two gripping arms and the associated clamping jaws are preferably made of plastic material. Preferably, the first and second gripping arms are made of a first plastic material and the base part and the upper and lower fingers of the first and second clamping jaws of a second plastic material with higher heat resistance than said first plastic material. Said first plastic material is for instance PA66 or PA46, or any other suitable plastic material. Said second plastic material is for instance PA66-HT, PPS or PEEK, or any other suitable plastic material with suitable heat resistance.

According to another embodiment of the invention, the suspension device comprises at least one gear mechanism, which comprises a first gear member rigidly connected to the first gripping arm and a second gear member rigidly connected to the second gripping arm, wherein said first and second gear members are in engagement with each other and are configured to be rotated in relation to each other when the gripping arms are pivoted in relation to each other. The gear mechanism will ensure that the two gripping arms always pivot synchronously when they are made to pivot in relation to the base, which implies that the first gripping arm always assumes the same angular position in relation to the base as the second gripping arm. Hereby, a tilting of the base and the attachment bracket in relation to the gripping arms is prevented.

The suspension device suitable comprises two gear mechanisms of the above-mentioned type arranged in parallel with each other on opposite sides of the base. Hereby, the suspension device can be given a very stable and well-balanced construction.

According to another embodiment of the invention, the suspension device comprises a spacer plate that is rigidly connected to the base and that extends upwards from the base substantially perpendicularly to the first and second pivot axes, wherein, in the closed position of the gripping arms, the spacer plate extends into an interspace between one of the lower fingers on the first clamping jaw and one of the lower fingers on the second clamping jaw, and wherein an upper edge on the spacer plate is configured to be exposed in the open space between the first and second clamping jaws in the open position of the gripping arms to thereby allow the spacer plate to form a lower support for an overhead power transmission line received in this open space. In the open position of the gripping arms, the spacer plate will keep the overhead power transmission line at a given distance above the base and prevent the overhead power transmission line from coming into contact with the possible gear mechanism or gear mechanisms between the gripping arms.

According to another embodiment of the invention, each one of the above-mentioned flank sections constitutes a cantilever flank section. Hereby, the entire area of rear face of each flank section can be exposed to surrounding air.

Further advantageous features of the suspension device according to the invention will appear from the dependent claims and the description following below.

### BRIEF DESCRIPTION OF THE DRAWINGS

With reference to the appended drawings, a specific description of embodiments of the invention cited as examples follows below. In the drawings:
- Figs 1-4: are perspective views from different directions of a suspension device according to an embodiment of the present invention, with the gripping arms of the suspension device in closed position,
- Fig 5: is a lateral view of the suspension device of Figs 1-4, with the gripping arms in closed position and with one of the covering plates of the suspension device removed,
- Fig 6: is a plan view from above of the suspension device of Figs 1-4, with the gripping arms in closed position,
- Fig 7: is a front view of the suspension device of Figs 1-4, with the gripping arms in closed position,
- Fig 8: is a lateral view of the suspension device of Figs 1-4, with the gripping arms in open position,
- Fig 9: is a perspective view of the suspension device of Figs 1-4, with the gripping arms in open position,
- Fig 10: is an exploded view of the suspension device of Figs 1-4
- Figs 11a: is a lateral view of the suspension device of Figs 1-4 clamped to an overhead power transmission line of small diameter,
- Fig 11b: is a lateral view of the suspension device of Figs 1-4 clamped to an overhead power transmission line of large diameter,
- Fig 12: is a perspective view of a suspension device according to an alternative embodiment of the invention, with the gripping arms in closed position, and
- Fig 13: is a lateral view of the suspension device of Fig 12 clamped to an overhead power transmission line.

### DETAILED DESCRIPTION OF EMBODIMENTS OF THE INVENTION

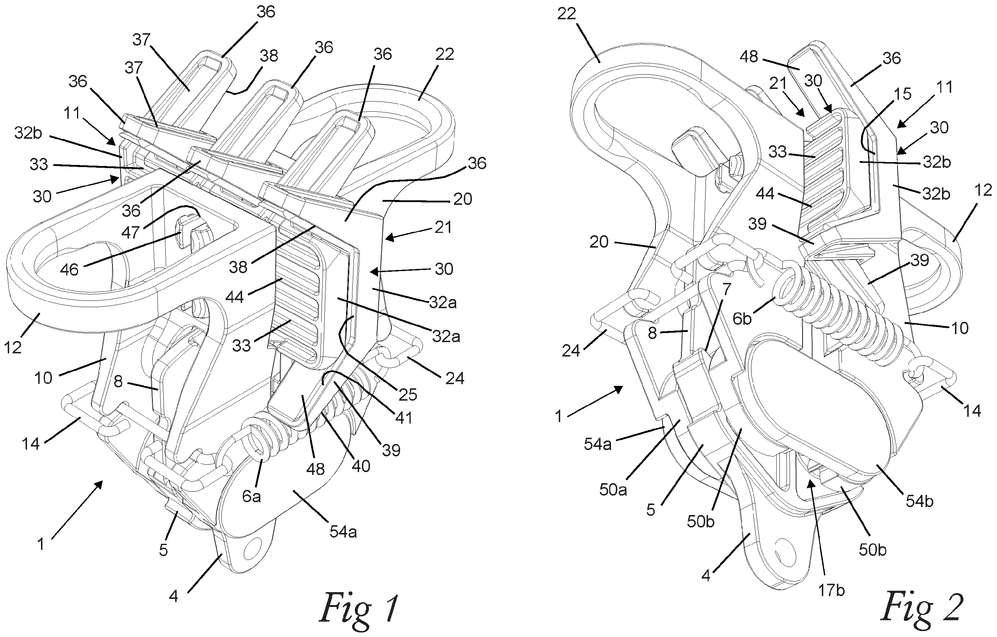

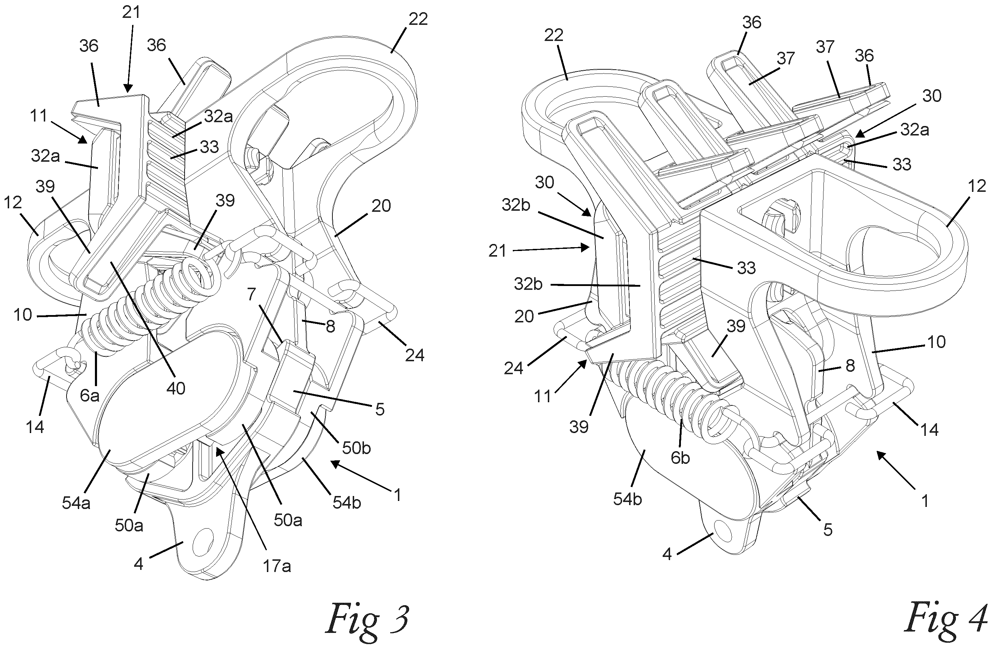

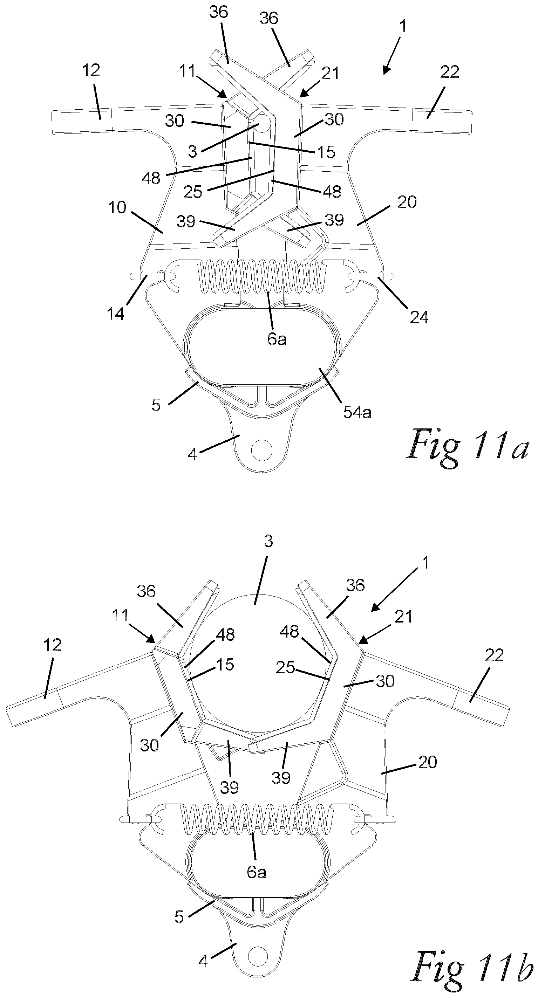

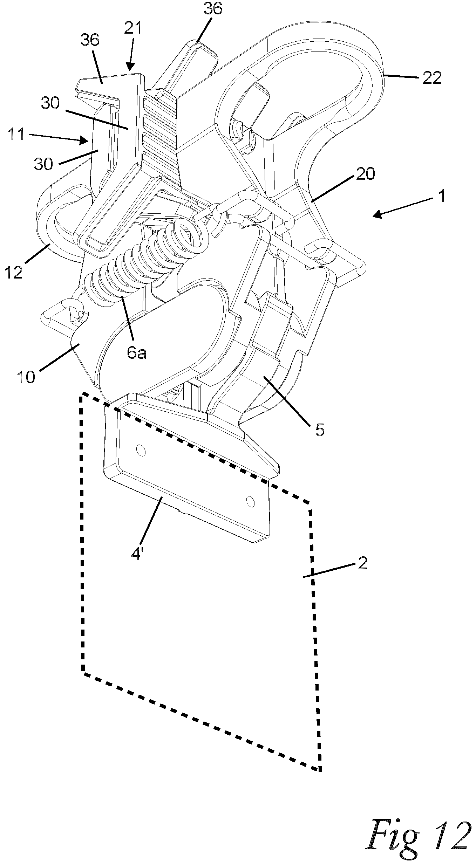

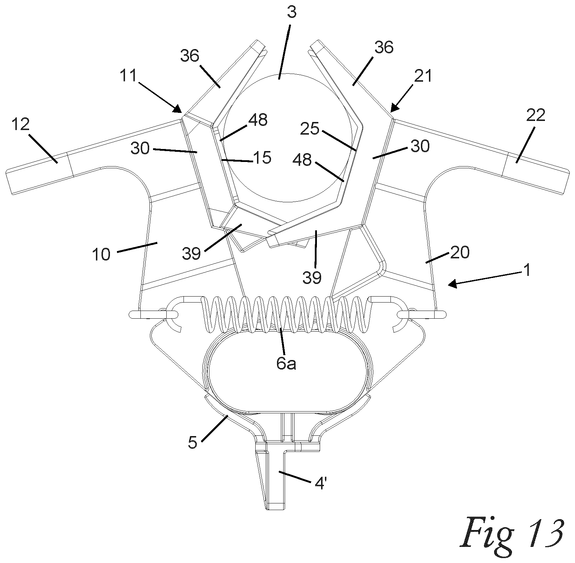

The suspension device 1 according to the invention is intended to be used for suspending an object 2 (schematically illustrated with broken lines in Fig 12) from an overhead power transmission line 3 (schematically illustrated in Figs 11a, 11b and 13. When suspended by means of the suspension device 1, the object 2 is attached to an attachment bracket 4, 4' of the suspension device 1, which is fixed to a base 5 of the suspension device 1. In the illustrated embodiments, the attachment bracket 4, 4' is rigidly connected to the base 5. The base 5 and the attachment bracket 4 are advantageously formed in one piece, i.e. as a single, unified structure. In the embodiment illustrated in Figs 1-11, the attachment bracket 4 is formed as a lug that projects in vertical direction downwards from a bottom part of the base 5, wherein the lug is provided with a through hole. In the embodiment illustrated in Figs 12 and 13, the attachment bracket 4' is formed as a holding plate that projects in vertical direction downwards from a bottom part of the base 5. Except for the design of the attachment bracket 4', the suspension device 1 illustrated in Figs 12 and 13 has the same design as the suspension device 1 illustrated in Figs 1-11.

The object 2 that is to be suspended and that is attached to the attachment bracket 4, 4' may for instance be a sign or a flag. The object could also be a device designed for scaring away birds, for instance of the type shown in WO 2006/011990 A2.

A first gripping arm 10 and a second gripping arm 20 are pivotally mounted to the base 5. The first gripping arm 10 is pivotable in relation to the base 5 about a first pivot axis A1 and the second gripping arm 20 is pivotable in relation to the base 5 about a second pivot axis A2, which extends in parallel with and at a distance from the first pivot axis A1.

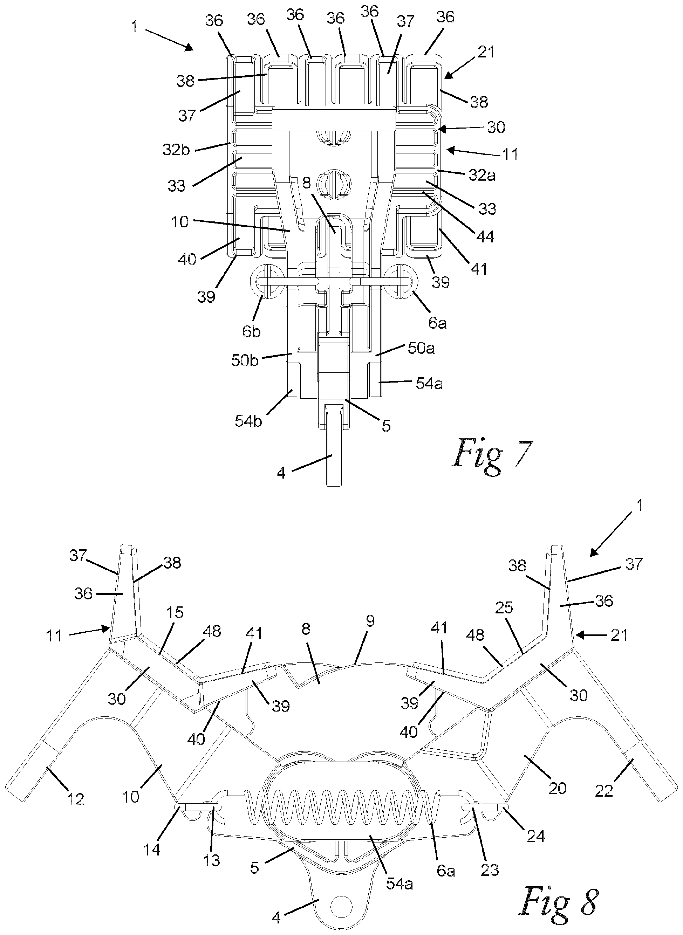

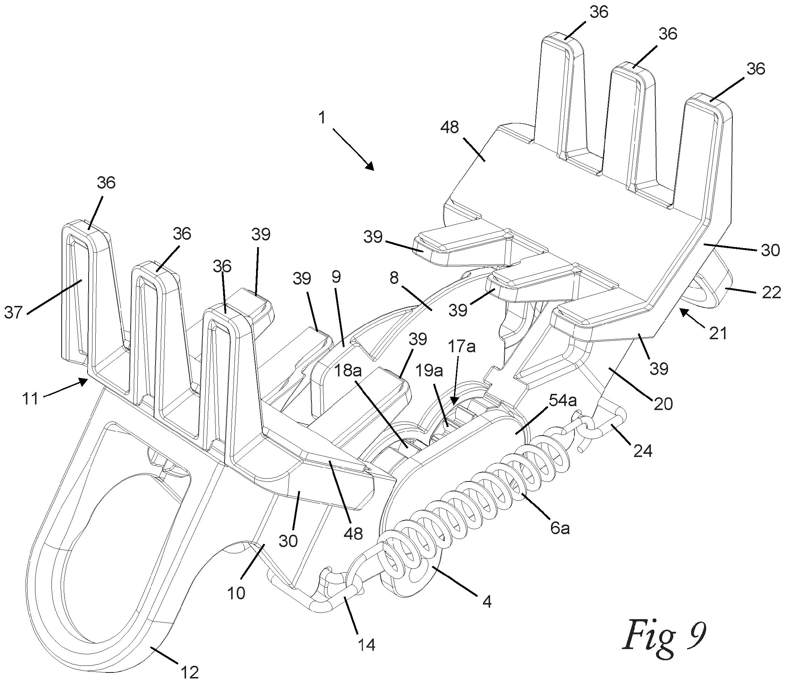

A first clamping jaw 11 is fixed to and carried by the first gripping arm 10 and a second clamping jaw 21 is fixed to and carried by the second gripping arm 20. By pivoting in relation to the base 5 about the respective pivot axis A1, A2, the first and second gripping arms 10, 20 are pivotable in relation to each other between an open position (see Figs 8 and 9), in which the first and second gripping arms 10, 20, and thereby the first and second clamping jaws 11, 21, are pivoted away from each other to allow an overhead power transmission line 3 to be inserted in a space between the first and second clamping jaws 11, 21, and a closed position, in which the first and second gripping arms 10, 20, and thereby the first and second clamping jaws 11, 21, are pivoted towards each other to allow the first and second clamping jaws 11, 21 to grip an overhead power transmission line 3 received in the space between the first and second clamping jaws 11, 21 and thereby clamp the suspension device 1 to the overhead power transmission line 3, as illustrated in Figs 11a, 11b and 13. Thus, when clamped to an overhead power transmission line 3, the suspension device 1 makes contact with the peripheral surface of the overhead power transmission line 3 through the clamping jaws 11, 21. In the above-mentioned open position of the gripping arms 10, 20, the space between the clamping jaws 11, 21 is open upwards to allow a part of an overhead power transmission line 3 to be inserted into this space by moving the suspension device 1 towards the overhead power transmission line.

One or more spring members 6a, 6b are configured to act between the gripping arms 10, 20 to urge them towards the closed position, wherein the gripping arms are pivotable from the closed position towards the open position against the action of the spring member or spring members 6a, 6b. In the illustrated embodiments, the suspension device 1 comprises two such spring members 6a, 6b in the form of cylindrical tension springs arranged in parallel with each other on opposite sides of the base 5. Each spring member 6a, 6b is arranged between the gripping arms 10, 20 and extends between an attachment point 13 of the first gripping arm 10 and an attachment point 23 of the second gripping arm 20. These attachment points 13, 23 are located on the gripping arms 10, 20 in such position that they are above the pivot axes A1, A2 of the gripping arms when the gripping arms 10, 20 are in the closed position and below the pivot axes A1, A2 when the gripping arms are in the open position. When the gripping arms 10, 20 are in such a pivot position in relation to the base 5 that the attachment points 13, 23 for the spring members 6a, 6b are above the pivot axes A1, A2, the spring members 6a, 6b strive to pivot the gripping arms 10, 20 to the closed position, and when the gripping arms 10, 20 are in such a pivot position in relation to the base 5 that the attachment points 13, 23 for the spring members 6a, 6b are below the pivot axes A1, A2, the spring members 6a, 6b strive to pivot the gripping arms 10, 20 to the open position. The pivotability of the gripping arms 10, 20 in the direction away from each other is limited by stop lugs 7 on the base 5. In the open position, the gripping arms 10, 20 abut against these stop lugs 7.

In the illustrated embodiments, the spring members 6a, 6b are at one end attached to the first gripping arm 10 by means of a first mounting clamp 14 and at the other end attached to the second gripping arm 20 by means of a second mounting clamp 24.

The first clamping jaw 11 comprises a base part 30, through which it is connected to the first gripping arm 10, wherein this base part 30 has a central section 31, a first flank section 32a that is rigidly connected to the central section 31 and projects laterally from the first gripping arm 10 on a first side thereof and an opposite second flank section 32b that is rigidly connected to the central section 31 and projects laterally from the first gripping arm 10 on an opposite second side thereof. Thus, said first and second flank sections 32a, 32b are arranged on opposite sides of said central section 31. In the illustrated embodiments, each one of the first and second flank sections 32a, 32b of the base part 30 of the first clamping jaw 11 constitutes a cantilever flank section. The base part 30 of the first clamping jaw 11 is preferably formed as a single, unified plate-like structure.

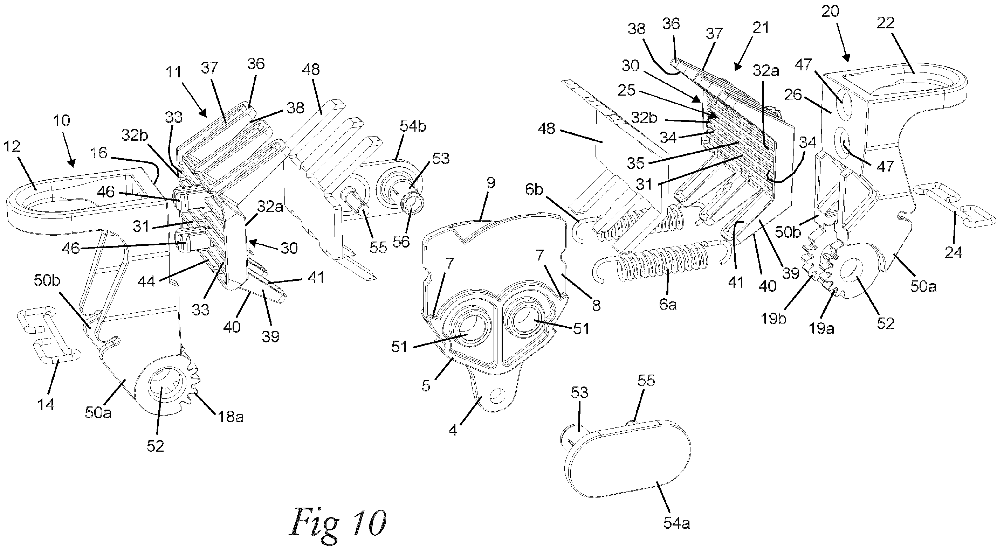

The first and second flank sections 32a, 32b of the base part 30 of the first clamping jaw 11 have a respective rear face 33 that is exposed to surrounding air and a respective front face 34 (see Fig 10) that is flush with, or at least substantially flush with, a front face 35 of the intermediate central section 31, wherein the front face 35 of the central section 31, the front face 34 of the first flank section 32a and the front face 34 of the second flank section 32b together form a first primary clamping surface 15 that extends in parallel to, or at least substantially in parallel to, the first pivot axis A1.

The second clamping jaw 21 comprises a base part 30, through which it is connected to the second gripping arm 20, wherein this base part 30 has a central section 31, a first flank section 32a that is rigidly connected to the central section 31 and projects laterally from the second gripping arm 20 on a first side thereof and an opposite second flank section 32b that is rigidly connected to the central section 31 and projects laterally from the second gripping arm 20 on an opposite second side thereof. Thus, said first and second flank sections 32a, 32b are arranged on opposite sides of said central section 31. In the illustrated embodiments, each one of the first and second flank sections 32a, 32b of the base part 30 of the second clamping jaw 21 constitutes a cantilever flank section. The base part 30 of the second clamping jaw 21 is preferably formed as a single, unified plate-like structure.

The first and second flank sections 32a, 32b of the base part 30 of the second clamping jaw 21 have a respective rear face 33 that is exposed to surrounding air and a respective front face 34 that is flush with, or at least substantially flush with, a front face 35 of the intermediate central section 31, wherein the front face 35 of the central section 31, the front face 34 of the first flank section 32a and the front face 34 of the second flank section 32b together form a second primary clamping surface 25 that extends in parallel to, or at least substantially in parallel to, the second pivot axis A2.

In the closed position of the gripping arms 10, 20, the first and second primary clamping surfaces 15, 25 are configured to face each other and apply pressure against an overhead power transmission line 3 received in the space between the first and second clamping jaws 11, 21 by pressing against said overhead power transmission line 3 from opposite sides thereof, as illustrated in Figs 11a, 11b and 13.

The first clamping jaw 11 is provided with two or more upper fingers 36 that are rigidly connected to and project obliquely upwards from the base part 30 of the first clamping jaw 11, wherein each one of these upper fingers 36 has a rear face 37 that is exposed to surrounding air and an opposite front face 38 that slants forwards beyond the first primary clamping surface 15. In the corresponding manner, the second clamping jaw 21 is provided with one or more upper fingers 36 that are rigidly connected to and project obliquely upwards from the base part 30 of the second clamping jaw 21, wherein each one of these upper fingers 36 has a rear face 37 that is exposed to surrounding air and an opposite front face 38 that slants forwards beyond the second primary clamping surface 25. The upper fingers 36 on the first and second clamping jaws 11, 21 have an interleaved arrangement, such that said one or more upper fingers 36 on the second clamping jaw 21 interleave with said two or more upper fingers 36 on the first clamping jaw 11 when the gripping arms 10, 20 are in the closed position. In the illustrated embodiments, each one of the first and second clamping jaws 11, 21 is provided with three such upper fingers 36 distributed along an upper edge of the base part 30 of the clamping jaw 11, 21.

The first clamping jaw 11 is provided with two or more lower fingers 39 that are rigidly connected to and project obliquely downwards from the base part 30 of the first clamping jaw 11, wherein each one of these lower fingers 39 has a rear face 40 that is exposed to surrounding air and an opposite front face 41 that slants forwards beyond the first primary clamping surface 15. In the corresponding manner, the second clamping jaw 21 is provided with two or more lower fingers 39 that are rigidly connected to and project obliquely downwards from the base part 30 of the second clamping jaw 21, wherein each one of these lower fingers 39 has a rear face 40 that is exposed to surrounding air and an opposite front face 41 that slants forwards beyond the second primary clamping surface 25. The lower fingers 39 on the first and second clamping jaws 11, 21 have an interleaved arrangement, such that the lower fingers 39 on the second clamping jaw 21 interleave with the lower fingers 39 on the first clamping jaw 11 when the gripping arms 10, 20 are in the closed position. In the illustrated embodiments, each one of the first and second clamping jaws 11, 21 is provided with three such lower fingers 39 distributed along a lower edge of the base part 30 of the clamping jaw 11, 21.

The front faces 38 of said upper fingers 36 on the first and second clamping jaws 11, 21 form upper secondary clamping surfaces capable of applying pressure against an overhead power transmission line 3 received in the space between the first and second clamping jaws 11, 21 by pressing against it, as illustrated in Figs 11a, 11b and 13. In the corresponding manner, the front faces 41 of said lower fingers 39 on the first and second clamping jaws 11, 21 form lower secondary clamping surfaces capable of applying pressure against an overhead power transmission line 3 received in the space between the first and second clamping jaws 11, 21 by pressing against it, as illustrated in Fig 11b.

The base part 30 and the upper and lower fingers 36, 39 of the first clamping jaw 11 are preferably formed in one piece, i.e. as a single, unified structure. Also the base part 30 and the upper and lower fingers 36, 39 of second clamping jaw 21 are preferably formed in one piece as a single, unified structure.

In the illustrated embodiments, cooling ribs 44 are provided on the rear faces 33 of the first and second flank sections 32a, 32b of the base part 30 of the first clamping jaw 11 and also on the rear faces 33 of the first and second flank sections 32a, 32b of the base part 30 of the second clamping jaw 21.

In the illustrated embodiments, each clamping jaw 11, 21 is releasably fixed to the associated gripping arm 10, 20 by means of a snap-fit connection, wherein the base part 30 of each clamping jaw 11, 21 is configured to bear against a support surface 16, 26 on the associated gripping arm 10, 20 through a rear face on the central section 31 of this base part 30. In the illustrated example, each snap-fit connection comprises two male-shaped coupling members 46, which are fixed to the central section 31 of the base part 30 of the associated clamping jaw 11, 21 and project from the rear face thereof in parallel to each other, wherein these male-shaped coupling members 46 are received with snap-fit engagement in a respective female-shaped coupling member 47 provided as a hole in the support surface 16, 26 on the associated gripping arm 10, 20. The clamping jaws 11, 21 may as an alternative be fixed to the gripping arms 10, 20 in any other suitable manner, for instance by means of screws or bolts.

In the illustrated embodiments, cooling ribs 44 are provided on the rear face of the central section 31 of the base part 30 of each clamping jaw 11, 21.

In the illustrated embodiments, the first and second clamping jaws 11, 21 have an identical design. In this case, the above-mentioned interleaved arrangement of the upper and lower fingers 36, 39 of the clamping jaws 11, 21 is achieved by mounting the first clamping jaw 11 to the first gripping arm 10 and the second clamping jaw 21 to the second gripping arm 20 in rotational positions offset by 180°, with the second clamping jaw 21 rotated 180° relative to the first clamping jaw 11.

The two gripping arms 10, 20 and the associated clamping jaws 11, 21 are preferably made of plastic material. Preferably, the first and second gripping arms 10, 20 are made of a first plastic material and the base part 30 and the upper and lower fingers 36, 39 of the first and second clamping jaws 11, 21 of a second plastic material with higher heat resistance than said first plastic material. Said first plastic material is for instance PA66 or PA46, or any other suitable plastic material. Said second plastic material is for instance PA66-HT, PPS or PEEK, or any other suitable plastic material with a heat resistance adapted to the temperature characteristics of the overhead power transmission line 3 to which the suspension device 1 is intended to be clamped.

In the illustrated embodiments, the first primary clamping surface 15 and the upper and lower secondary clamping surfaces on the first clamping jaw 11 are covered by a layer 48 of elastomeric material, preferably in the form of high-temperature silicone rubber. In this case, the second primary clamping surface 25 and the upper and lower secondary clamping surfaces on the second clamping jaw 21 are also covered by a layer 48 of elastomeric material, preferably in the form of high-temperature silicone rubber. The layers 48 of elastomeric material are preferably applied onto the associated clamping surfaces by being moulded onto them.

One or more gear mechanisms 17a, 17b are with advantage configured to act between the gripping arms 10, 20. In the illustrated embodiments, the suspension device 1 comprises two such gear mechanisms 17a, 17b arranged in parallel with each other on opposite sides of the base 5. Each gear mechanism 17a, 17b comprises a first gear member 18a, 18b rigidly connected to the first gripping arm 10 and a second gear member 19a, 19b rigidly connected to the second gripping arm 20. The first gripping member 18a, 18b of each gear mechanism is rotatable about the first pivot axis A1, and the second gear member 19a, 19b of each gear mechanism is rotatable about the second pivot axis A2. The first and second gear members 18a, 19b of the first gear mechanism 17a are in engagement with each other and configured to be rotated in relation to each other when the gripping arms 10, 20 are pivoted in relation to each other. In the same way, the first and second gear members 18b, 19b of the second gear mechanism 17b are in engagement with each other and configured to be rotated in relation to each other when the gripping arms 10, 20 are pivoted in relation to each other. When one gripping arm is pivoted about its pivot axis, the gear mechanisms 17a, 17b will force the other gripping arm to perform a corresponding pivotal movement, but in the opposite direction of rotation, about its pivot axis. Hereby, the gripping arms 10, 20 will always pivot synchronously and in mutually opposite directions of rotation about their pivot axes A1, A2 when a pivotal movement is applied to the gripping arms. The first gripping arm 10 and the associated gear members 18a, 18b connected to this gripping arm are suitably formed in one piece, i.e. as a single, unified structure. In the corresponding manner, the second gripping arm 20 and the associated gear members 19a, 19b connected to this gripping arm are suitably formed in one piece as a single, unified structure.

In the illustrated embodiments, each gripping arm 10, 20 is provided with two parallelly protruding legs 50a, 50b, which extend on opposite sides of the base 5 and through which the gripping arm is pivotally mounted to the base. Each leg 50a, 50b has a through hole 52 for receiving a pivot pin 53 (see Fig 10) and an outer edge of the leg has a section which is provided with cogs in order to form one of the above-mentioned gear members 18a, 18b, 19a, 19b.

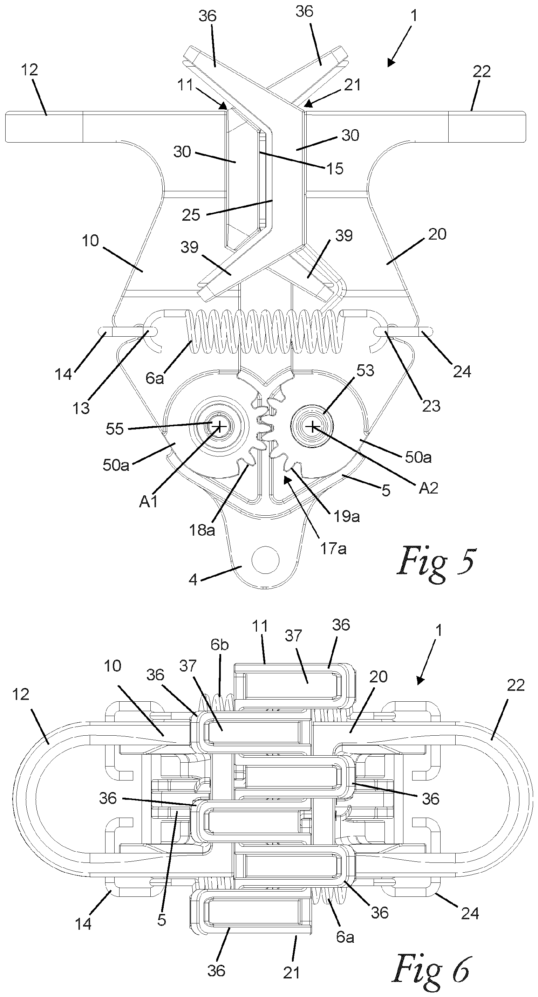

In the illustrated embodiments, the suspension device 1 further comprises two covering plates 54a, 54b arranged opposite to each other on opposite sides of the base 5. In Fig 5, the suspension device 1 is shown with one covering plate 54a removed, for improved clarity. The first gear mechanism 17a is on its outwardly facing side covered by one covering plate 54a and the second gear mechanism 17b is on its outwardly facing side covered by the other covering plate 54b. The covering plates 54a, 54b are connected to each other through two pins 53, which extend between the covering plates and through a respective through hole 51 in the base 5 and which form pivot pins for the gripping arms 10, 20. The first gripping arm 10 is pivotally mounted on one of the pins 53 and the second gripping arm 20 is pivotally mounted on the other pin 53. In the illustrated example, one of the pins 53 is fixedly connected to one 54a of the covering plates and configured to engage with a fixing member 55 of the other covering plate 54b, whereas the other pin 53 is fixedly connected to the other covering plate 54b and configured to engage with a fixing member 55 of the first-mentioned covering plate 54a. By engagement between the pins 53 and the associated fixing members 55, the covering plates 54a, 54b are locked to each other and to the base 5. Furthermore, the gripping arms 10, 20 are secured to the base 5 by means of the pins 53 and the covering plates 54a, 54b. Each fixing member 55 suitably has the form of a plug that is received with press fit in a recess 56 provided in the associated pin 53 at the outer end thereof.

In the illustrated embodiments, the suspension device 1 comprises a spacer plate 8 that is rigidly connected to the base 5 and that extends vertically upwards from the base 5 substantially perpendicularly to the first and second pivot axes A1, A2. When the gripping arms 10, 20 are in the closed position, the spacer plate 8 extends into an interspace between one of the lower fingers 39 on the first clamping jaw 11 and one of the lower fingers 39 on the second clamping jaw 21. An upper edge 9 on the spacer plate 8 is exposed in the space between the first and second clamping jaws 11, 21 when the gripping arms 10, 20 are in the open position, as illustrated in Figs 8 and 9. When the gripping arms 10, 20 are in the open position, said upper edge 9 on the spacer plate 8 forms a lower support for an overhead power transmission line 3 received in the space between the first and second clamping jaws 11, 21 and thereby keeps the overhead power transmission line 3 at a given distance above the base 5 and prevents the overhead power transmission line 3 from coming into contact with the above-mentioned gear members 18a, 18b, 19a, 19b of the gear mechanisms 17a, 17b. The spacer plate 8 is so adapted to the clamping jaws 11, 21 that the upper edge 9 on the spacer plate 8 is in level with the front face 41 of each lower finger 39 when the gripping arms 10, 20 are in the open position, as illustrated in Fig 8, to thereby ensure a correct positioning of an overhead power transmission line 3 in the space between the clamping jaws 11, 21 when the gripping arms 10, 20 are in the open position and thereafter pivoted to the closed position. The spacer plate 8 and the base 5 are suitably formed in one piece, i.e. as a single, unified structure.

In order to facilitate the manoeuvring of the gripping arms 10, 20 between closed position and open position, the first and second gripping arms 10, 20 are provided with a respective handle 12, 22. These handles 12, 22 are intended to be gripped by a user with the hands or with a tool in order to pivot the gripping arms 10, 20 about the respective pivot axis A1, A2.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A suspension device for suspending a sign or other object from an overhead power transmission line, the suspension device (1) comprising:
- a base (5);
- an attachment bracket (4, 4'), which is fixed to the base (5) and to which said object is attached or attachable;
- a first gripping arm (10), which is pivotally mounted to the base (5) and pivotable in relation to the base (5) about a first pivot axis (A1), and a second gripping arm (20), which is pivotally mounted to the base (5) and pivotable in relation to the base (5) about a second pivot axis (A2) that is parallel to and located at a distance from the first pivot axis (A1);
- a first clamping jaw (11) fixed to and carried by the first gripping arm (10) and a second clamping jaw (21) fixed to and carried by the second gripping arm (20), wherein the first and second gripping arms (10, 20), by pivoting about the respective pivot axis (A1, A2), are pivotable in relation to each other between an open position, in which the first and second gripping arms (10, 20), and thereby the first and second clamping jaws (11, 21), are pivoted away from each other to allow an overhead power transmission line (3) to be inserted in a space between the first and second clamping jaws (11, 21), and a closed position, in which the first and second gripping arms (10, 20), and thereby the first and second clamping jaws (11, 21), are pivoted towards each other to allow the first and second clamping jaws (11, 21) to grip an overhead power transmission line (3) received in the space between the first and second clamping jaws (11, 21) and thereby clamp the suspension device (1) to the overhead power transmission line; and
- at least one spring member (6a) configured to act between the first and second gripping arms (10, 20) to urge them towards the closed position, wherein the first and second gripping arms (10, 20) are pivotable from the closed position towards the open position against the action of the at least one spring member (6a),
**characterized in:**
- **that** the first clamping jaw (11) comprises a base part (30), through which it is connected to the first gripping arm (10), wherein this base part (30) has a central section (31), a first flank section (32a) that is rigidly connected to the central section (31) and projects laterally from the first gripping arm (10) on a first side thereof and an opposite second flank section (32b) that is rigidly connected to the central section (31) and projects laterally from the first gripping arm (10) on an opposite second side thereof, wherein these first and second flank sections (32a, 32b) have a respective rear face (33) that is exposed to surrounding air and a respective front face (34) that is substantially flush with a front face (35) of the intermediate central section (31), and wherein the front face (35) of the central section (31), the front face (34) of the first flank section (32a) and the front face (34) of the second flank section (32b) together form a first primary clamping surface (15) that extends substantially in parallel to the first pivot axis (A1);
- **that** the second clamping jaw (21) comprises a base part (30), through which it is connected to the second gripping arm (20), wherein this base part (30) has a central section (31), a first flank section (32a) that is rigidly connected to the central section (31) and projects laterally from the second gripping arm (20) on a first side thereof and an opposite second flank section (32b) that is rigidly connected to the central section (31) and projects laterally from the second gripping arm (20) on an opposite second side thereof, wherein these first and second flank sections (32a, 32b) have a respective rear face (33) that is exposed to surrounding air and a respective front face (34) that is substantially flush with a front face (35) of the intermediate central section (31), wherein the front face (35) of the central section (31), the front face (34) of the first flank section (32a) and the front face (34) of the second flank section (32b) together form a second primary clamping surface (25) that extends substantially in parallel to the second pivot axis (A2), and wherein, in the closed position of the gripping arms (10, 20), the first and second primary clamping surfaces (15, 25) are configured to face each other and apply pressure against an overhead power transmission line (3) received in the space between the first and second clamping jaws (11, 21) by pressing against said overhead power transmission line (3) from opposite sides thereof;
- **that** the first clamping jaw (11) is provided with two or more upper fingers (36) that are rigidly connected to and project obliquely upwards from the base part (30) of the first clamping jaw (11), each one of these upper fingers (36) having a rear face (37) that is exposed to surrounding air and an opposite front face (38) that slants forwards beyond the first primary clamping surface (15);
- **that** the second clamping jaw (21) is provided with one or more upper fingers (36) that are rigidly connected to and project obliquely upwards from the base part (30) of the second clamping jaw (21), each one of these upper fingers (36) having a rear face (37) that is exposed to surrounding air and an opposite front face (38) that slants forwards beyond the second primary clamping surface (25), wherein the upper fingers (36) on the first and second clamping jaws (11, 21) are arranged in an interleaved configuration, such that said one or more upper fingers (36) on the second clamping jaw (21) are configured to interleave with said two or more upper fingers (36) on the first clamping jaw (11) in the closed position of the gripping arms (10, 20);
- **that** the front faces (38) of said upper fingers (36) on the first and second clamping jaws (11, 21) form upper secondary clamping surfaces capable of applying pressure against an overhead power transmission line (3) received in the space between the first and second clamping jaws (11, 21) by pressing against it;
- **that** the first clamping jaw (11) is provided with two or more lower fingers (39) that are rigidly connected to and project obliquely downwards from the base part (30) of the first clamping jaw (11), each one of these lower fingers (39) having a rear face (40) that is exposed to surrounding air and an opposite front face (41) that slants forwards beyond the first primary clamping surface (15);
- **that** the second clamping jaw (21) is provided with two or more lower fingers (39) that are rigidly connected to and project obliquely downwards from the base part (30) of the second clamping jaw (21), each one of these lower fingers (39) having a rear face (40) that is exposed to surrounding air and an opposite front face (41) that slants forwards beyond the second primary clamping surface (25), wherein the lower fingers (39) on the first and second clamping jaws (11, 21) are arranged in an interleaved configuration, such that said two or more lower fingers (39) on the second clamping jaw (21) are configured to interleave with said two or more lower fingers (39) on the first clamping jaw (11) in the closed position of the gripping arms (10, 20); and
- **that** the front faces (40) of said lower fingers (39) on the first and second clamping jaws (11, 21) form lower secondary clamping surfaces capable of applying pressure against an overhead power transmission line (3) received in the space between the first and second clamping jaws (11, 21) by pressing against it.

2. A suspension device according to claim 1, **characterized in that** cooling fins or cooling ribs (44) are provided on the rear faces (33) of the first and second flank sections (32a, 32b) of the base part (30) of the first clamping jaw (11) and on the rear faces (33) of the first and second flank sections (32a, 32b) of the base part (30) of the second clamping jaw (21).

3. A suspension device according to claim 1 or 2, **characterized in:**
- **that** the base part (30) and the upper and lower fingers (36, 39) of the first clamping jaw (11) are formed in one piece; and
- **that** the base part (30) and the upper and lower fingers (36, 39) of the second clamping jaw (21) are formed in one piece.

4. A suspension device according to any of claims 1-3, **characterized in:**
- **that** the first clamping jaw (11) is releasably fixed to the first gripping arm (10), preferably by means of a snap-fit connection, wherein the base part (30) of the first clamping jaw (11) is configured to bear against a support surface (16) on the first gripping arm (10) through a rear face of the central section (31) of this base part (30); and
- **that** the second clamping jaw (21) is releasably fixed to the second gripping arm (20), preferably by means of a snap-fit connection, wherein the base part (30) of the second clamping jaw (21) is configured to bear against a support surface (26) on the second gripping arm (20) through a rear face of the central section (31) of this base part (30).

5. A suspension device according to claim 4, **characterized in that** the base part (30) of each one of the first and second clamping jaws (11, 21) has a plate-like structure.

6. A suspension device according to claim 4 or 5, **characterized in that** cooling fins or cooling ribs (44) are provided on the rear face of the central section (31) of the base part (30) of the first clamping jaw (11) and on the rear face of the central section (31) of the base part (30) of the second clamping jaw (21).

7. A suspension device according to any of claims 1-6, **characterized in that** each one of the first and second primary clamping surfaces (15, 25) is covered by a layer (48) of elastomeric material, preferably in the form of high-temperature silicone rubber.

8. A suspension device according to claim 7, **characterized in that** each one of the upper and lower secondary clamping surfaces is covered by a layer (48) of elastomeric material, preferably in the form of high-temperature silicone rubber.

9. A suspension device according to any of claims 1-8, **characterized in that** each one of the first and second clamping jaws (11, 21) is provided with at least three such upper fingers (36) distributed along an upper edge of the base part (30) of the clamping jaw (11 ,21).

10. A suspension device according to any of claims 1-9, **characterized in that** each one of the first and second clamping jaws (11, 21) is provided with at least three such lower fingers (39) distributed along a lower edge of the base part (30) of the clamping jaw (11, 21).

11. A suspension device according to any of claims 1-10, **characterized in:**
- **that** the first and second gripping arms (10, 20) are made of a first plastic material, such as PA66 or PA46; and
- **that** the base part (30) and the upper and lower fingers (36, 39) of the first and second clamping jaws (11, 21) are made of a second plastic material with higher heat resistance than said first plastic material, such as PA66-HT, PPS or PEEK.

12. A suspension device according to any of claims 1-11, **characterized in that** the suspension device (1) comprises at least one gear mechanism (17a), which comprises a first gear member (18a) rigidly connected to the first gripping arm (10) and a second gear member (19a) rigidly connected to the second gripping arm (20), wherein said first and second gear members (18a, 19a) are in engagement with each other and are configured to be rotated in relation to each other when the gripping arms (10, 20) are pivoted in relation to each other.

13. A suspension device according to any of claims 1-12, **characterized in that** the suspension device (1) comprises a spacer plate (8) that is rigidly connected to the base (5) and that extends upwards from the base (5) substantially perpendicularly to the first and second pivot axes (A1, A2), wherein, in the closed position of the gripping arms (10, 20), the spacer plate (8) extends into an interspace between one of the lower fingers (39) on the first clamping jaw (11) and one of the lower fingers (39) on the second clamping jaw (21), and wherein an upper edge (9) on the spacer plate (8) is configured to be exposed in the space between the first and second clamping jaws (11, 21) in the open position of the gripping arms (10, 20) to thereby allow the spacer plate (8) to form a lower support for an overhead power transmission line (3) received in this space.

14. A suspension device according to any of claims 1-13, **characterized in:**
- **that** said spring member (6a) constitutes a first spring member of the suspension device (1);
- **that** the suspension device (1) also comprises a second spring member (6b) that is configured to act between the first and second gripping arms (10, 20) to urge them towards the closed position, wherein the first and second gripping arms (10, 20) are pivotable from the closed position towards the open position against the action of the second spring member (6b); and
- **that** the first spring member (6a) and the second spring member (6b) are arranged in parallel with each other on opposite sides of the base (5).

15. A suspension device according to any of claims 1-14, **characterized in:**
- **that** each one of said first and second flank sections (32a, 32b) of the base part (30) of the first clamping jaw (11) constitutes a cantilever flank section; and
- **that** each one of said first and second flank sections (32a, 32b) of the base part (30) of the second clamping jaw (21) constitutes a cantilever flank section
